## Europäisches Patentamt
## European Patent Office
## Office européen des brevets

(11) Publication number: **0 184 323**
**B1**

## (12) EUROPEAN PATENT SPECIFICATION

(45) Date of publication of patent specification: **28.02.90**

(51) Int. Cl.⁵: **G 02 B 6/40**

(21) Application number: **85307941.6**

(22) Date of filing: **01.11.85**

(54) Distributor for optical cable connections.

(30) Priority: **05.11.84 GB 8427896**

(43) Date of publication of application:
**11.06.86 Bulletin 86/24**

(45) Publication of the grant of the patent:
**28.02.90 Bulletin 90/09**

(84) Designated Contracting States:
**DE FR IT**

(56) References cited:
| | |
|---|---|
| GB-A-2 042 210 | US-A-4 252 406 |
| GB-A-2 043 943 | US-A-4 332 435 |
| GB-A-2 050 714 | US-A-4 359 262 |
| GB-A-2 051 399 | US-A-4 432 602 |
| US-A-4 203 650 | |

**PATENTS ABSTRACTS OF JAPAN, vol. 8, no. 97,
8th May 1984, page 59 P 272 & JP - A - 59 9614**

**THE PRACTICAL PLUMBING GUIDE, N.W. Kay,
Odhams Press 1946, pages 158-163**

(73) Proprietor: **Telephone Cables Limited
Chequers Lane
Dagenham Essex RM9 6QA (GB)**

(72) Inventor: **Jung, Roger Erwin
38 Tufton Road
Chingford London E4 8LE (GB)**
Inventor: **George, Edward Kitchener
93 Nelson Road
South Hornchurch Essex (GB)**

(74) Representative: **Maury, Richard Philip
The General Electric Company p.l.c. G.E.C.
Patent Department (Wembley Office) Hirst
Research Centre East Lane
Wembley Middlesex HA9 7PP (GB)**

Courier Press, Leamington Spa, England.

**Description**

This invention relates to distributors for optical cable connections and more particularly to distributors for connections of cables of the sort where one or more fibres are loosely enclosed within each of a plurality of tubes, which tubes are stranded together and enclosed within a protective sheath.

When such cables need to be connected to other cables or to optical apparatus, the fibres within the cable have to be separated so that they can be spliced or otherwise connected to the other cable or apparatus. It is thus necessary to provide a device for separating out the fibres from a bundle of fibres within a tube and providing single, separate, protected fibres for connecting as desired.

A distributor for achieving this separation is known from GB—2043943B, which provides a distributor for optical cable connections, comprising first and second body portions, the first body portion having means for connection, in use, to a tube containing one or more optical fibres, and the second body portion having means for connection, in use, to at least one protective sleeve into which the or one of said fibres can be inserted, and a member arranged to co-operate with said first and second body portions so as to enclose the space between them. One difficulty with such an arrangement is that access is not provided to the space between the first and second body portions, i.e. to the lengths of the fibres exposed between their common tube and their individual sleeves.

On a much larger scale, U.S. Patent No. 4359262 discloses an optical cable junction box enclosing an organiser tray, in which each tube from each cable is connected to a corresponding tube from the other cable using the tray. The individual fibres in each tube are distributed at the tray, at which they are joined to corresponding individual fibres from a tube from the other cable. Thus, it is known to provide apparatus for use in optical cable connections, comprising first and second body portions, the first body portion having means for connection, in use, to a tube containing one or more optical fibres, and the second body portion having means for connection, in use, to at least one protective sleeve into which the or one of said fibres can be inserted, a member arranged to co-operate with said first and second body portions so as to enclose the space between them, and spacing members maintaining the body portions at spaced positions whilst providing access to the space between them.

The invention provides such apparatus in the form of a distributor of individual optical fibres from only one such tube, the means for connecting the first body portion to the tube comprising a recess in one end of the first body portion into which, in use, the tube can be inserted which recess is extended through the body portion so as to form a passageway for the optical fibres to pass from the tube and into the space between the first and second body portions in that the spacing members are moulded integrally with the first and second body portions; and in that the distributor comprises at least one protective sleeve bonded into a respective recess extended through the second body portion, the recess or recesses constituting the said connecting means for the sleeve or sleeves.

In a preferred embodiment of the present invention, the spacing members are between the first and second body portions.

Conveniently, both the tube and the sleeves are bonded into their respective recesses which are preferably of the same cross-section as the respective tube or sleeve, for example using an adhesive, but alternatively or additionally, the recesses may have ridges for gripping the outside of the tube or sleeves. The ridges may be circumferential but are preferably parallel to the direction of insertion of the tube or sleeves.

One ebodiment of a distributor according to the invention will now be more fully described by way of example with reference to the drawing of which:

Figure 1 shows an end view of the distributor; and

Figure 2 shows a longitudinal cross-sectional view of the distributor with the protective sleeves and the tube in place.

In order to connect an optical cable to either another cable or some other optical apparatus, the optical fibres within the cable must be brought out of the cable structure and separated so that they can be spliced or connected as desired. For a cable of the type where several plastic tubes each loosely enclosing a bundle of optical fibres, this involves unravelling the plastic tubes and then cutting them open to get at the fibres which then need to be separated and protected before they can be spliced or connected.

Thus the invention provides a distributor 1 which is connected at one end, to one such plastic tube 2 containing a plurality of fibres 3. The distributor 1 is made up of two parts — a cover member 5, and a distributor body 6, both of which are made of plastic.

The cover member 5 is in the form of a cylinder with one end open and the other end tapering to an opening 15, through which the plastic tube 2 passes to reach the distributor body 6.

The distributor body is made up of two body portions 7 and 8 spaced apart from and connected to each other by two longitudinally extending spacing members 9 moulded integrally with the portions and disposed one at each side of the body with a space between them. The first body portion 7 is in the form of a cylinder with one end tapering to co-operate with the cover member 5 and having a recess 10 in this end for receiving the plastic tube 2. A passageway 11 connects the recess 10 to the other end of the body portion 7 thus allowing the optical fibres 3 to pass right through the body portion 7 and into the space 14 between the two body portions 7 and 8.

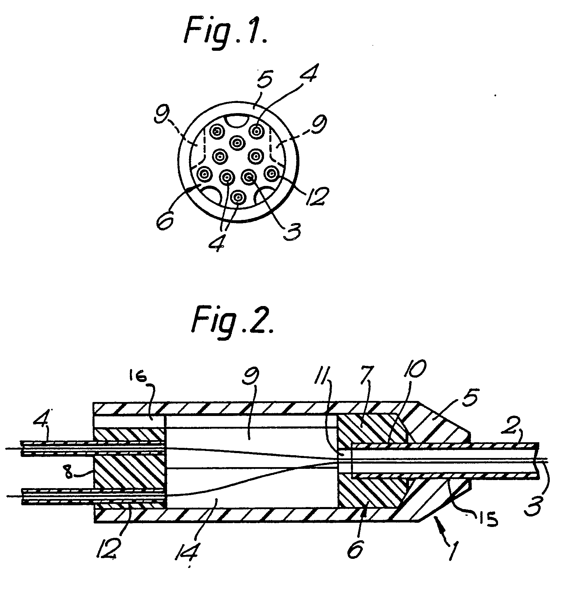

The second body portion 8 is also in the form of a cylinder, but it has several recesses 12 (ten in the illustrated embodiment as shown in Figure 1) passing right through the cylinder parallel to its axis. These recesses 12 are provided with plastic sleeves 4 bonded into recesses 12 by means of adhesive such as Cyanoacrylic adhesive.

In use, therefore the cover member and the distributor body 6 are separated and the plastic tube 2 is passed through the cover member 5 and into the first body portion 7 and is bonded thereto. The optical fibres then extend through into the space 14 between the body portions 7 and 8 where they are separated and inserted into the plastic sleeves 4 already attached to the second body portion.

The cover member 5 is then pushed back over the two body portions 7 and 8 so as to enclose the space 14 and protect the optical fibres 3 therein. An axially extending ridge 16 within the cover 5 engages within a co-operating groove in the body portion 8 so as to prevent relative rotation of the cover 5 and body 6.

In an alternative embodiment, the recess 10 for receiving the plastic tube 2 may have longitudinal ridges along at least part of its length so as to more firmly grip the plastic tube 2. In such a case, the tube 2 need not be bonded to the first body portion 7 though it may be so bonded if desired.

## Claims

1. Apparatus for use in optical cable connections, comprising first (7) and second (8) body portions, the first body portion (7) having means (11) for connection, in use, to a tube (2) containing one or more optical fibres (3), and the second body portion (8) having means (12) for connection, in use, to at least one protective sleeve (4) into which the or one of said fibres (3) can be inserted, a member (5) arranged to co-operate with said first and second body portions so as to enclose the space (14) between them, and spacing members (9) maintaining the body portions at spaced positions whilst providing access to the space (14) between them, characterised in that the apparatus is a distributor of individual optical fibres (3) from only one such tube (2), the means for connecting the first body portion (7) to the tube (2) comprising a recess (11) in one end of the first body portion into which, in use, the tube can be inserted which recess is extended through the body portion so as to form a passageway for the optical fibres (3) to pass from the tube and into the space (14) between the first and second body portions in that the spacing members are moulded integrally with the first and second body portions; and in that the distributor comprises at least one protective sleeve (4) bonded into a respective recess (12) extended through the second body portion (8), the recess or recesses (12) constituting the said connecting means for the sleeve or sleeves (4).

2. A distributor according to Claim 1, wherein the body portions (7, 8) and the said member (5) are made of plastics material.

3. A distributor according to Claim 1 or 2, wherein the spacing members (9) are between the first and second body portions (7, 8).

4. A distributor according to Claim 1, 2 or 3, wherein the or each recess (12) has a ridge which presses against and grips the outside of the sleeve (4).

5. A distributor according to Claim 4, wherein the ridge extends substantially parallel to the direction of insertion of the sleeve.

6. A distributor according to any one of the preceding Claims wherein the said member (5) has an integral ridge (16) which engages a co-operating groove in the first (7) and second (8) body portions to prevent their relative rotation.

7. A distributor for optical cable connections consisting of two parts: a first part having first (7) and second (8) spaced end portions which are maintained at spaced positions by integral spacer members thereby providing access to the space between the end portions, said first end portion having means for connection, in use, to a tube (2) containing optical fibres (3), said second end portion (8) having means for connection in use to a plurality of separate protective sleeves (4) for distributing the fibres; and a second part (5) which, in use, fits over and covers said first part so as to enclose the space between said first and second end portions

## Patentansprüche

1. Vorrichtung zur Verwendung für Verbindungen von optischen Kabeln, aufweisend: einen ersten (7) und zweiten (8) Körperabschnitt, wovon der erste Körperabschnitt (7) Einrichtungen (11) zum Anschluß an eine Röhre (2) im Einsatz aufweist, die eine oder mehrere Lichtleitfasern (3) enthält, und der zweite Körperabschnitt (8) Einrichtungen (12) zum Anschluß an zumindest einen Schutzschlauch (4) im Einsatz aufweist, in den die oder eine der Fasern (3) eingeführt werden können, ein Teil (5), das dazu ausgelegt ist, derart mit dem ersten und zweiten Körperabschnitt zusammenzuwirken, daß es den Raum (14) zwischen diesen umschließt, und Abstandsstücke (9), die die Körperabschnitte, während sie Zugriff auf den Raum (14) zwischen diesen ermöglichen, in beabstandeten Positionen halten, dadurch gekennzeichnet, daß die Vorrichtung ein Verteiler von einzelnen Lichtleitfasern (3) von nur einer derartigen Röhre (2) ist, daß die Einrichtungen zum Anschluß des ersten Körperabschnitts (7) an die Röhre (2) eine Ausnehmung (11) in einem Ende des ersten Körperabschnitts aufweisen, in die im Einsatz die Röhre einführbar ist, wobei die Ausnehmung derart durch den Körperabschnitt verlängert ist, daß sie einen Durchtrittsweg für die Lichtleitfasern (3) zum Durchtritt von der Röhre in den Raum (14) zwischen dem ersten und zweiten Körperabschnitt bildet; daß die Abstandsstücke in integraler Form mit dem ersten und zweiten Körperabschnitt hergestellt sind; un daß der Verteiler zumindest einen Schutzschlauch (4) aufweist, der in eine entsprechende Ausnehmung (12) geklebt ist, die sich durch den zweiten Körperabschnitt (8) erstreckt, wobei die Ausnehmung oder Ausnehmungen (12) die Anschlußeinrichtungen für de Schlauch oder die Schläuche (4) bilden.

2. Verteiler nach Anspruch 1, in welchem die Körperabschnitte (7, 8) und das Teil (5) aus Kunststoffmaterial gefertigt sind.

3. Verteiler nach Anspruch 1 oder 2, in welchem die Abstandsstücke (9) sich zwischen dem ersten und zweiten Körperabschnitt (7, 8) befinden.

4. Verteiler nach Anspruch 1, 2 oder 3, in welchem die oder jede Ausnehmung (12) eine Rippe aufweisen, die gegen die Außenseite des Schlauches (4) drückte und diese greift.

5. Verteiler nach Anspruch 4, in welchem die Rippe sich im wesentlichen parallel zur Einführungsrichtung des Schlauches erstreckt.

6. Verteiler nach einem der vorhergenden Ansprüche in welchem des Teil (5) eine innere Rippe (16) aufweist, die in eine mit ihr zusammenwrikende Rille im ersten (7) und zweiten (8) Körperabschnitt eingreift, um deren relative Drehung zu verhindern.

7. Verteiler für Verbindungen von optischen Kabeln, bestehend aus zwei Tilen: einem ersten Teil, das erste (7) und zweite (8) beabstandete Endabschnitte aufweist, die durch integrale Abstandsstücke in beabstandeten Positionen gehalten werden, wobei Zugriff auf den Raum zwischen den Endabschnitten ermöglicht wird, wobei der erste Endabschnitt Einrichtungen zum Anschluß an eine Röhre (2) im Einsatz, die Lichtleitfasern (3) enthält, aufweist und der zweite Endabschnitt Einrichtungen zum Anschluß an mehrere separate Schutzschläuche (4) in Einsatz aufweist, die die Fasern verteilen; und einem zweiten Teil (5), das im Einsatz so über das erste Teil gepaßt ist und dieses bedeckt, daß es den Raum zwischen dem ersten und zweiten Endabschnitt umschließt.

**Revendications**

1. Appareil destiné à être utilisé pour des connexions de câbles optiques, comprenant une première et une seconde partie de corps (7, 8), la première partie de corps (7) ayant un dispositif (11) qui, pendant l'utilisation, est destiné à être reccordé à un tube (2) contenant une ou plusieurs fibres optiques (3) et la seconde partie de corps (8) comportant un dispositif (12) qui, pendant l'utilisation, est destiné à être connecté à au moins un manchon protecteur (4) dans lequel la fibre ou l'une des fibres (3) peut être introduite, un organe (5) destiné à coopérer avec la première et la seconde partie de corps afin qu'il entoure l'espace (14) délimité entre elles, et des organes d'entretoise (9) maintenant les parties de corps à distance l'une de l'autre et donnant accès à l'escape (14) compris entre elles, l'appareil étant caractérisé en ce qu'il constitue un distributeur de fibres optiques individuelles (3) provenant d'un sel tube (2), le dispositif de raccordement de la première partie de corps (7) au tube (2) comporte une cavité (11) formée dans un première extrémité de la première de corps et dans laquelle, pendant l'utilisation, le tube peut être introduit, cette cavité traversant la partie de corps afin qu'elle forme un passage pour les fibres optiques (3) disposées du tube à l'espace (14) délimité entre la première et la second partie de corps, en ce que les organes d'entretoise sont moulés en une seule pièce avec la première et la seconde partie de corps, et en ce que le distributeur comporte au moins un manchon protecteur (4) collé dans une cavité respective (12) traversant la seconde partie de corps (8), la cavité ou les cavités (12) constituant le dispositif de raccordement du manchon ou des machons (4).

2. Distributeur selon la revendication 1, dans lequel les parties de corps (7, 8) et ledit organe (5) sont formés d'un matière plastique.

3. Distributeur selon la revendication 1 ou 2, dans lequel les organes d'entretoise (9) sont disposés entre la première et la seconde partie de corps (7, 8).

4. Distributeur selon la revendication 1, 2 ou 3, dans lequel la cavité ou chaque cavité (12) a une nervure qui est en appui contre l'extérieur du manchon (4) et le serre.

5. Distributeur selon la revendication 4, dans lequel la nervure est disposée en direction sensiblement parallèle à la direction d'introduction du manchon.

6. Distributeur selon l'une quelconque des revendications précédentes, dans lequel ledit organge (5) a une nervure interne (16) qui coopère avec un gorge complémentaire formée dans la première et la seconde partie de corps (7, 8) afin que celles-ci ne puissent pas tourner l'une par rapport à l'autre.

7. Distributeur pour connexions de câbles optiques, formé de deux éléments, un premier élément ayant une première et un seconde partie (7, 8) d'extrémité qui sont distantes et qui sont maintenues à des positions distantes par des organes d'entretoise qui leur sont solidaires, si bien que l'accès à l'espace délimité entre les parties d'extrémité est possible, la première partie d'extrémité ayant un dispositif qui, pendant l'utilisation, est destiné à assurer la connexion à un tube (2) contenant des fibres optiques (3), la seconde partie d'extrémité ayant un dispositif qui, pendant l'utilisation, est destiné à assurer la connexion à plusieurs manchons protecteurs séparés (4) afin que le fibres soient distribuées, et un second élément (5) qui, pendant l'utilisation s'ajuste sur le première élément et le recouvre afin que l'espace compris entre la première et la second partie d'extrémité soit enfermé.

## Fig.1.

## Fig.2.

1